# EUROPEAN PATENT SPECIFICATION

(11) **EP 2 015 126 B1**
(45) Date of publication and mention of the grant of the patent: **26.01.2011**
(21) Application number: 07121961.2
(22) Date of filing: 30.11.2007
(51) Int. Cl.: G02B 27/09, F21V 5/00, B60Q 3/04

(54) **Light emitting diode with a beam shaping device for backlighting a dashboard**
Leuchtdiode mit einer Strahlformungsvorrichtung zur Hintergrundbeleuchtung einer Instrumententafel
Diode électroluminescente avec dispositf de mise en forme de faisceaux pour éclairage en arrière-plan d'une planche de bord

(30) Priority: 10.07.2007 EP 07425427
(43) Date of publication of application: 14.01.2009
(73) Proprietor: C.R.F. Società Consortile per Azioni, 10043 Orbassano (Torino) (IT)
(72) Inventor: Bernard, Stefano, 10043, Orbassano (Torino) (IT); Bollea, Denis, 10043, Orbassano (Torino) (IT); Innocenti, Gianfranco, 10043, Orbassano (Torino) (IT)
(74) Representative: Notaro, Giancarlo

(56) References cited:
- EP-A- 1 251 366
- EP-A- 1 653 254
- EP-A- 1 754 997
- EP-B- 0 806 039
- WO-A-2007/036186
- US-A- 5 148 317
- US-A- 6 025 820
- US-A1- 2005 286 145

## Description

The present invention relates to lighting devices of the type comprising a substantially plane substrate and one or more semiconductor light sources (LEDs or chip-LEDs), distributed over the substrate and electrically connected to conductive supply paths, that are suited for example for back-lighting a display or the dashboard of a motor vehicle or for lighting up the passenger compartment of a motor vehicle and more in general are able to generate a beam of light characterized by a controlled illuminance profile emitted by an area with substantially uniform illuminance profile.

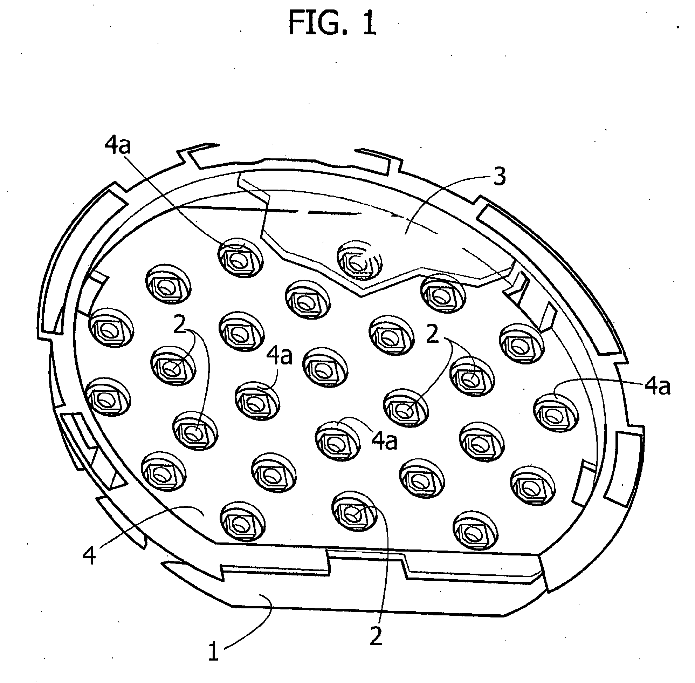

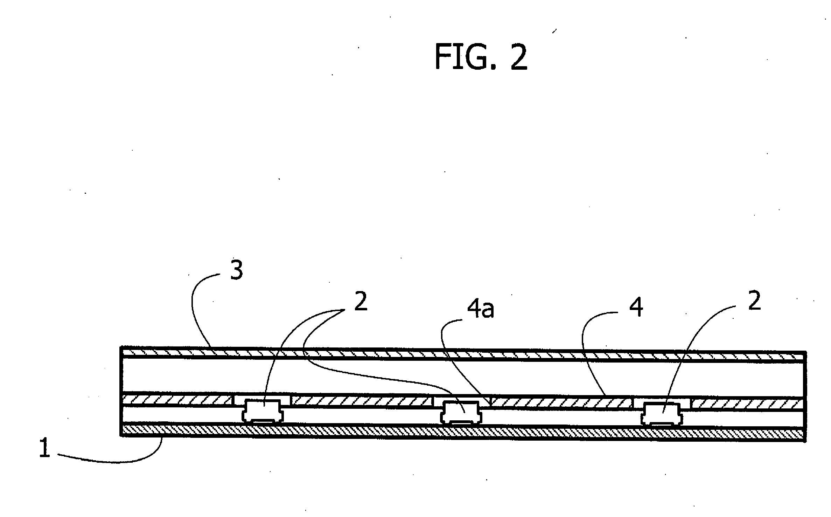

Figures 1 and 2 of the annexed plates of drawings show, respectively, a perspective view and a schematic cross-sectional view of a back-lighting device for displays of a known type, which can be used, for example, for displays provided on dashboards of motor vehicles. Devices of this type comprise a substrate 1, on which a plurality of LED sources 2 of the SMD type are distributed, each of which is supplied by means of conductive paths (not illustrated) deposited on the substrate 1. Set on top of the substrate 1 and of the LED sources 2 is a diffuser element 3 having a plane conformation. Once again in order to diffuse the light emitted by the sources 2, between the substrate 1 and the diffuser element 3 there is also set a back-diffuser 4 having a series of openings 4a in positions corresponding to the various LED sources 2.

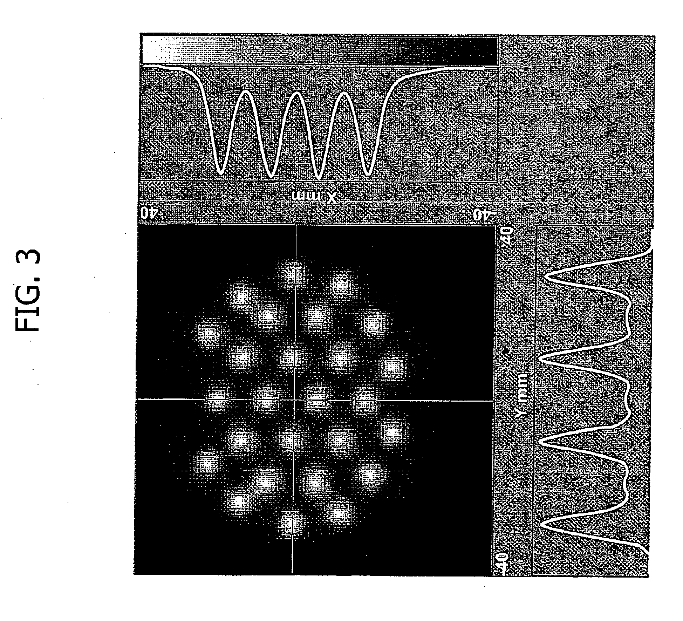

Figure 3 of the annexed plates of drawings illustrates the typical illumination that can be obtained with the known device of Figures 1 and 2 and measured in a plane set immediately on top of the diffuser element 3. As may be seen, notwithstanding the provision of the diffuser element 3 and the back-diffuser 4, the resulting illuminance profile is not uniform but substantially presents the so-called "dot-effect". Amongst the possible solutions for reducing said effect there may be mentioned: 1) positioning of the diffuser element 3 at a distance from the substrate 1 greater than a minimum value, typically in the region of at least 25 mm, with consequent increase in the overall dimensions of the back-lighting device; and 2) introduction, downstream of said diffuser 3 and close to it, of a further optical element with variable transmittance, said variable transmittance being maximum in the areas corresponding to a minimum illumination (for example, the areas located between two adjacent sources 2) and minimum in the areas corresponding to a maximum illumination (for example, the areas located in positions corresponding to the sources 2). The latter solution presents, as compared to the solution 1 illustrated above, the advantage of leaving the thickness substantially unaltered with respect to the original geometry, but at the cost of introducing a further optical element, hence reducing the overall efficiency of the optical back-lighting system. It follows that, given the same luminance of the device, a larger number of sources is required.

The use of a single lens for collimating the light emitted by a source is known and, for example, described in the document No. EP0636232. Said patent describes an optical system designed to gather a substantially collimated beam of light to concentrate it in its focus. Said optical system is curved, with the concavity facing the focus, and is characterized by a saw-tooth profile operating in total internal reflection (TIR) for focusing the rays. Said patent contemplates the embodiment in which a source of light is set in the focus, in which case the beam coming out of the optical system would be substantially collimated and parallel to the optical axis of said optical system. However, the optical system according to said embodiment is not able to guarantee a constant luminance on the surface of exit of the beam.

The patent No. US5577493 illustrates an optical system that overcomes the problem of lack of uniformity of the patent previously referred to by setting between said source and the collimating lens an additional lens, designed to render the outcoming beam uniform. Said optical system maintains the curvature of the collimating lens with the concavity facing the source, and is applied to sources immersed in the additional lens.

The optical solutions described above, however, present numerous disadvantages and limitations:
1) they are not applicable to SMD sources, in which the semiconductor source is immersed in the opaque packaging forming an integral part of the source itself, being instead suitable for completely exposed sources (as in the chip-LED) or set in the proximity of the centre of a transparent and spherical packaging (as in high-flow LED sources);
2) the curvature of the saw-tooth profile of the collimating lens, with the consequent marked difference of thickness between the peripheral regions and the central one, renders production thereof difficult using standard industrial techniques, such as injection moulding of plastic material;
3) the illuminance profile that can be obtained is continuous and typically circular in shape.

A device of the type indicated in the precharacterizing part of Claim 1 is known from the document No. WO 2007/036186 A. The device described in said document would in theory be able to illuminate a plane surface orthogonal to the optical axis of the source uniformly, for a limited area, but the divergence of the rays coming out of said optical system is in any case very wide, up to a maximum of approximately 180°, and is not controllable. Furthermore, to get also the peripheral regions of the illuminated area to emit rays in a direction close to that of the optical axis of the system, it would be necessary to introduce a diffuser with high divergence, with a consequent reduction in the overall efficiency of the system.

The purpose of the present invention is to overcome the limitations of the known art, by providing a lighting device based upon semiconductor sources suitable for back-lighting dashboards for motor vehicles, that will be very compact, in particular with a very contained thickness, for example less than 20 mm, and that even so will be characterized by a substantially uniform outcoming light beam with a controlled divergence (for example, very small or else reduced in one direction and extended in the direction normal to the first).

In particular, forming a purpose of the invention is the production of a lighting device based upon semiconductor sources suitable, for example, for back-lighting dashboards for motor vehicles that will make it possible to obtain:
- a profile of illumination made up of one or more areas that are substantially uniform in a plane set at a distance of less than 20 mm from the semiconductor sources; and
- a controlled divergence, for example as a whole less than 20°.

With a view to achieving said purposes, forming the subject of the present invention is a lighting device having the characteristics specified in Claim 1.

According to a further preferred characteristic of the invention, the aforesaid predetermined distance is less than 20 mm. For example, said distance can be in the region of 15 mm.

In a first embodiment, the primary optical system and the secondary optical system are defined by two elements separate from one another. In a second embodiment, the primary optical system and the secondary optical system are defined by opposite surfaces of one and the same element.

The invention applies both to the case of a single semiconductor source (LED or chip-LED) and to the case of a number of semiconductor sources (LEDs or chip-LEDs) designed to light up a predetermined area: in the latter case, the device forming the subject of the present patent is made up of the sum of a plurality of sub-devices substantially identical to one another and set alongside one another, each comprising a single semiconductor source associated to a primary optical system and a secondary optical system, said primary optical system being optimized so that the illuminance profile resulting therefrom, alongside the illuminance profile generated by the adjacent primary optical systems, forms a substantially uniform overall illuminance profile.

The invention will now be described with reference to the annexed plates of drawings, which are provided purely by way of non-limiting example and in which:
- Figures 1-3 refer to a device according to the known art, according to what has already been described above;
- Figure 4 is a partial schematic cross-sectional view of a first exemplary device;
- Figure 4A is a detail of Figure 4;
- Figure 5 is a partial schematic cross-sectional view of a second exemplary device;
- Figure 6 shows an example of the illuminance profile that can be obtained by means of the exemplary device (Figure 6A) and of the section of the illuminance profile corresponding thereto (Figure 6B);
- Figure 7 shows an example of the illuminance profile that can be obtained with a single module of the exemplary device;
- Figure 8 is a perspective view of an exemplary device obtained with a modular approach, each module being in conformance with the embodiment illustrated schematically in Figure 4;
- Figure 9 illustrates the illuminance profile that can be obtained with the device of Figure 8;
- Figure 10 illustrates at an enlarged scale a detail of Figure 4;
- Figure 11 illustrates, at an enlarged scale, a further detail of Figure 4;
- Figure 12 illustrates a typical mask of a dashboard;
- Figure 13 is a schematic illustration of the back-lighting system for the pointer of a dashboard;
- Figure 14 illustrates an example of illuminance profile suitable for back-lighting the mask of Figure 12;
- Figure 15 is a partial schematic cross-sectional view of an embodiment of the device according to the invention, designed to generate the illuminance profile of Figure 14;
- Figure 16 illustrates a further example of illuminance profile suitable for back-lighting the mask of Figure 12;
- Figure 17 is a partial schematic cross-sectional view of a further embodiment of the device according to the invention, designed to generate the illuminance profile of Figure 16; and
- Figure 18 illustrates a further embodiment of the device illustrated in Figure 8.

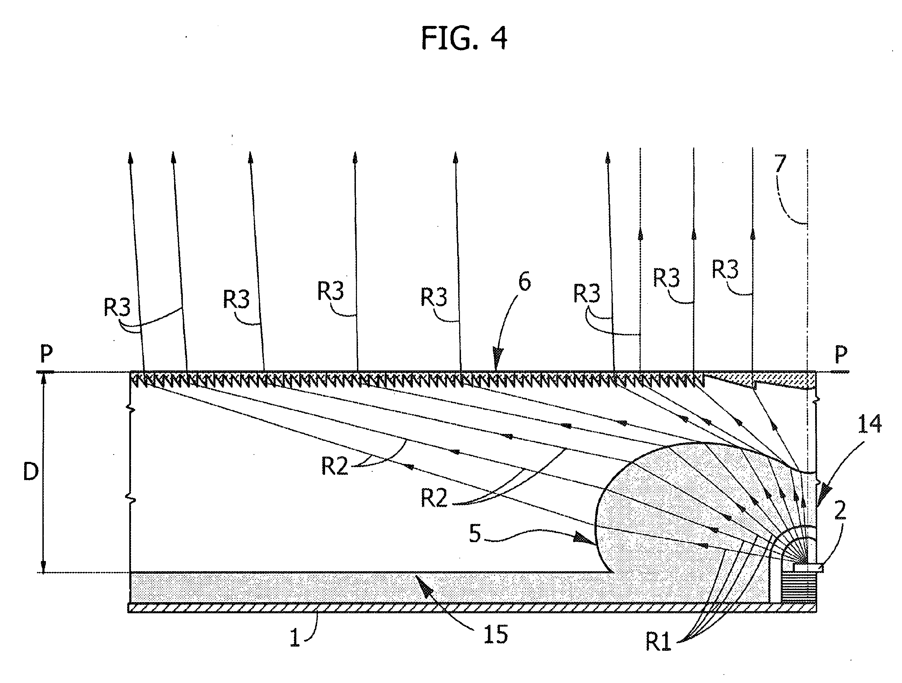

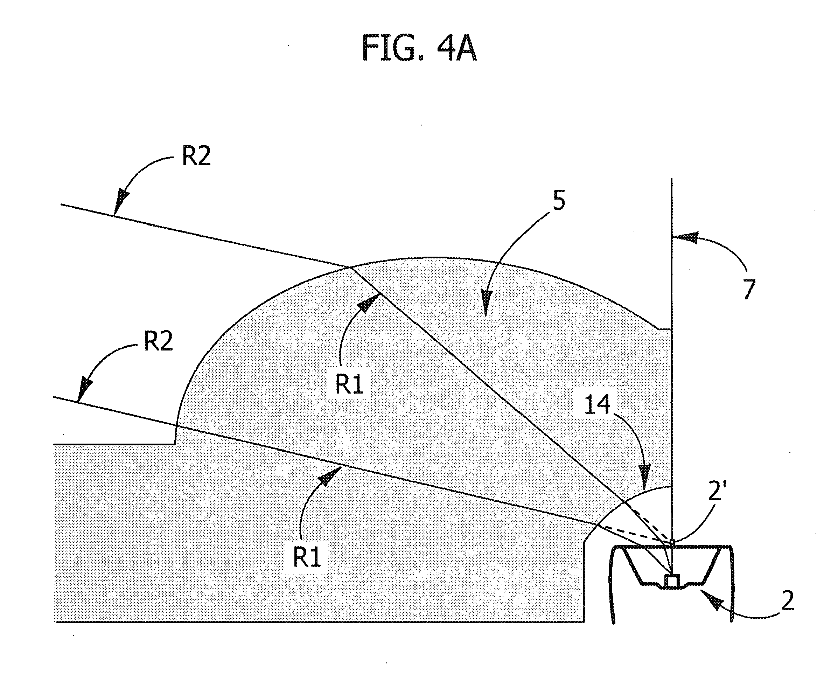

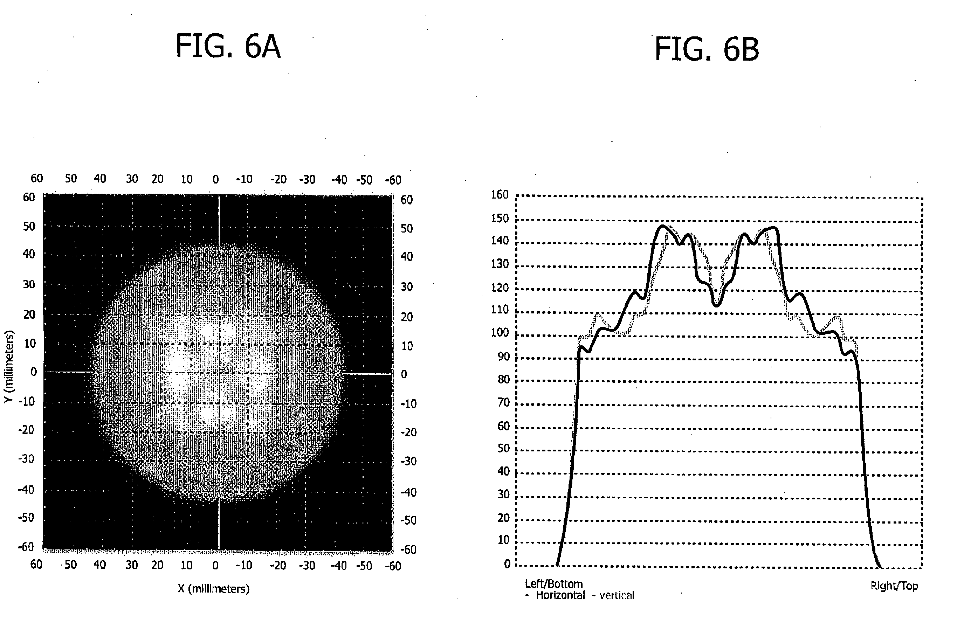

A first exemplary device is illustrated in Figures 4 and 6. In the case of said example, the device f is optimized in the form of a back-lighter and comprises a substrate 1, set on which is a single light source 2 of a compact semiconductor type, for example of the SMD LED type or of the chip-LED type.

In the aforesaid example, the source 2 set on the substantially plane substrate 1 is immersed in a cap 5 constituted by a material having a refractive index higher than 1, for example resin, polycarbonate, polymethyl methacrylate, or glass. Said cap 5 constitutes a primary optical system for the respective LED source 2 and has an outer surface shaped so that the light emitted by the source immersed therein is refracted on the outer surface of the cap (see rays R1 and R2 in Figure 4) in such a way as to form, in a plane P-P (Figure 4) substantially parallel to the substrate 1 and set at a predetermined distance D therefrom, typically not greater than 20 mm, a substantially uniform illuminance profile, by which it is meant that lighting-up of the plane P-P remains substantially constant from one point to another of the plane P-P. The surface in the plane P-P with substantially constant illuminance is linearly very extensive in a direction orthogonal to the principal axis of emission (i.e., in the horizontal direction in the figure), about at least twice the distance between the plane P-P and the source 2.

Said cap 5 can be obtained using processes of a type in themselves known; for example:
1) the cap 5 can be directly injected around the respective source 2 in liquid or gel form through the use of a mould having an appropriate shape, with subsequent thermal curing or UV treatment for crosslinking of the resin in the desired form;
2) the cap 5 can be preliminarily shaped and then set on the substrate 1 that houses the source 2, taking care to make, in the bottom part of each cap 5, a cavity 14, within which said source 2 is received; said cavity 14 can have:
   - a substantially hemispherical shape with the centre of the area of emission of the source 2 substantially coinciding with the centre of said hemispherical surface;
   - a generic shape designed to house the source 2, the space between the source 2 and the cavity 14 being then filled with material having a refractive index close to that of the cap, in order to maximize the optical continuity and consequently minimize the Fresnel losses;
   - a shape appropriately calculated so that, when a source 2 of the SMD type is used, all the rays R1 emitted by the source 2 and penetrating within the cap 5 through the surface of the cavity 14 appear substantially emitted by a virtual source 2' (see Figure 4A). In fact, in the case of the of a source 2 in SMD form with a simple cavity 14 of spherical shape, each ray R1 would appear to have a different virtual source, with consequent partial loss of control and decrease in the efficiency of the system; in the case, then, of the use of a source 2 in SMD form with the cavity 14 filled with transparent material, the rays R1 coming out of said source 2 could not have an inclination, with respect to the optical axis 7 passing through the centre of the cap 5 and of the area emitting the source 2 and normal to the substrate 1 of the optical system, higher than approximately 60°, with consequent reduction in the area that can be lit up in the plane P-P.

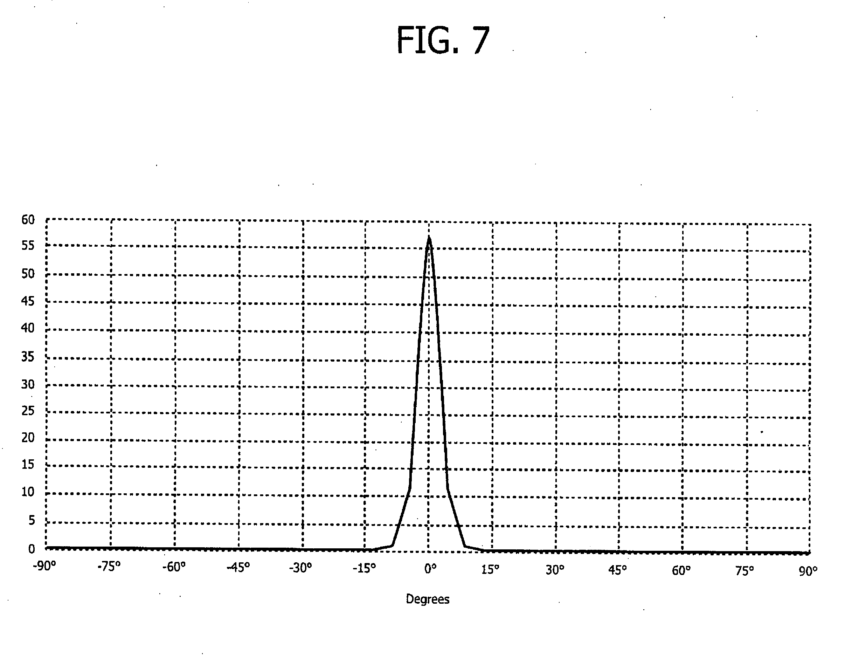

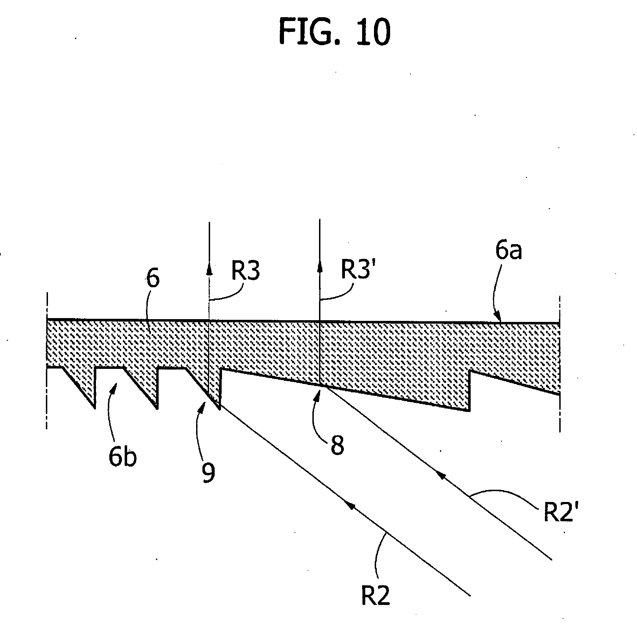

In the proximity of, and substantially parallel to, the plane P-P set at a predetermined distance from the substrate 1, on which the primary optical system forms a substantially uniform illuminance profile, a secondary optical system is set, which, in the case of the embodiment illustrated in Figures 4 and 6, is constituted by an element separate from the primary optical system 5, in the form of a plate 6. The plate 6 is made of a material having a refractive index higher than 1, for example polycarbonate or polymethyl methacrylate, of which at most one of the faces, for example the top face 6A (as viewed in Figure 10) is substantially plane and the other face 6B defines an optical surface, for example with circular symmetry, concentric with respect to the axis 7 passing through the centre of the cap 5 and of the emitting area of the source 2 and normal to the substrate 1. The optical surface 6b of the plate 6 is shaped so as to deviate the rays R2 (Figure 4) into rays R3 that propagate in a direction such as to form a predetermined illuminance profile. Purely by way of example, said rays R3 can form a substantially collimated beam and hence originate an illuminance profile, such as the one represented in Figure 7, where the semi-divergence is less than approximately 10°.

The profile of the optical surface 6b can be:
- a continuous profile; or else
- a Fresnel-lens profile, in order to reduce the overall dimensions, as illustrated in Figures 4, 10 and 11.

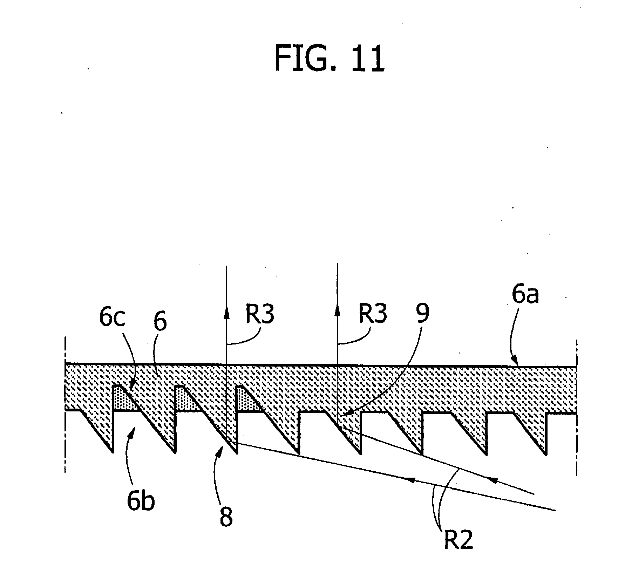

In the case of adoption of a Fresnel profile, the latter may locally be:
- "direct", i.e., the light ray R2' is refracted at input by said profile and immediately after refracted at output by said optical system in the ray R3' (see Figure 10);
- "total internal reflection" (TIR), i.e., the incident light ray is refracted and immediately after reflected in TIR by said Fresnel profile (see Figures 10, 11), and then finally refracted at output by the optical system in the ray R3.

In a preferred embodiment, the Fresnel profile of the optical surface 6B is constituted by a combination of the previous two solutions; i.e., it is made up of direct regions and TIR regions so as to optimize the overall efficiency of the optical system.

The Fresnel profile can be obtained completely within the plate 6 constituting the secondary optical system, or else can be simplified by partly filling the grooves 6c of said Fresnel profile, that is ignoring the portions thereof that would be optically inactive, i.e., that would not be touched by the light rays emitted by the source and deviated by the primary optical system 5 (portions designated in Figure 11 by 6c). In this way, the marked thinning of the plate 6 in areas corresponding to said grooves 6c is eliminated, with considerable reduction in the aspect ratio of the profile of said secondary optical system, to the advantage of simplification of the production process.

Figure 6 shows the advantages of the exemplary device in terms of uniformity of illuminance in a plane set downstream and in the proximity of the secondary optical system 6.

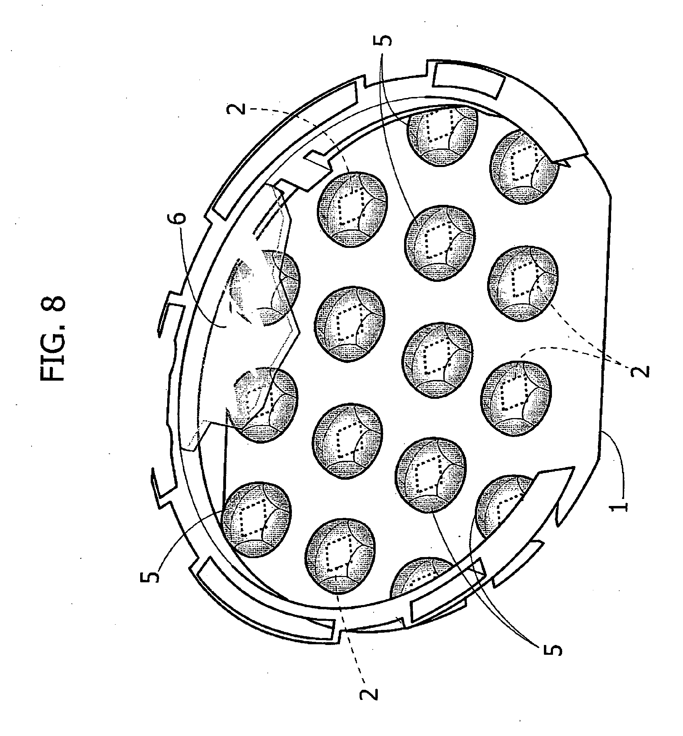

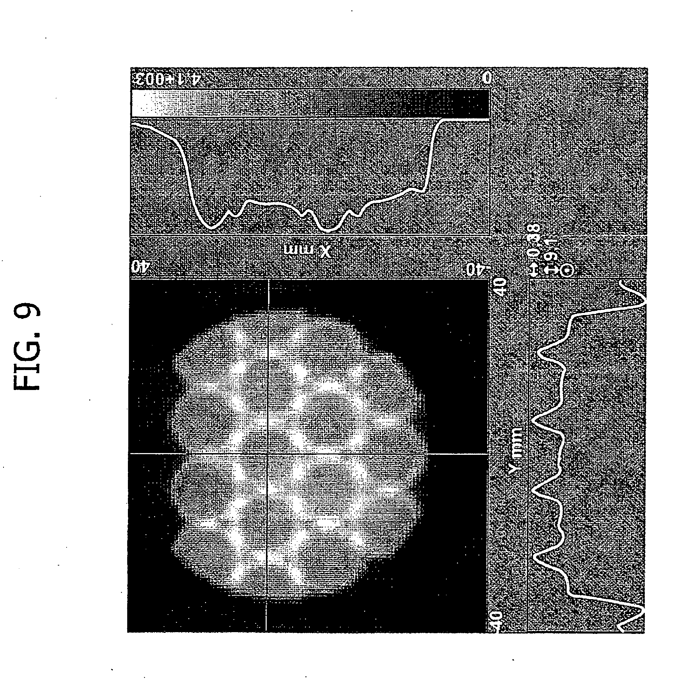

A further exemplary device is illustrated in Figures 8 and 9. In the case of said example, the device comprises a substrate 1, distributed over which, in a way similar to what is illustrated in Figure 1 with reference to the known device, is a plurality of light sources 2 of a compact semiconductor type, for example of the SMD LED type or of the chip-LED type (see Figure 8).

In the aforesaid further embodiment, each source 2 set on the substantially plane substrate 1 is immersed in a cap 5 having a shape substantially resembling the first example described previously (see Figure 4). The difference with respect to the solution of Figure 4 lies in the fact that, in this case, the final profile is obtained by a plurality of sources 2. Each cap 5 in the solution of Figure 8 hence forms a primary optical system for the respective LED source 2 and has an outer surface shaped so that the light emitted by the source 2 immersed therein is refracted in an area corresponding to the outer surface of the cap 5 in such a way that the sum of the illuminance profiles formed by each cap 5 forms, in a plane P-P (Figure 4) substantially parallel to the substrate 1 and set at a predetermined distance D therefrom, typically not greater than 20 mm, a substantially uniform illuminance profile. This means that the lighting of the plane P-P remains substantially constant from one point to another of the plane P-P (see Figure 9).

In a way similar to what was described previously for the first embodiment, in the proximity of, and substantially parallel to, the plane P-P set at a predetermined distance from the substrate 1, on which the primary optical system forms a substantially uniform illuminance profile, there is set a secondary optical system, which in the case of the embodiment illustrated in Figures 8 and 9 is constituted by a element separate from the primary optical system 5, in the form of a plate 6. Said secondary optical system 6 can be obtained:
- by adopting a modular approach, i.e., by setting alongside one another a number of basic secondary optical systems corresponding to the number of sources 2, and corresponding primary optical systems 5, each of said basic secondary optical systems being optimized for the corresponding primary optical system 5, in order to obtain a predetermined illuminance profile at output from the plate 6;
- by adopting a unitary approach, i.e., by providing a secondary optical system 6 common to all of the sources 2 and to the corresponding primary optical systems 5.

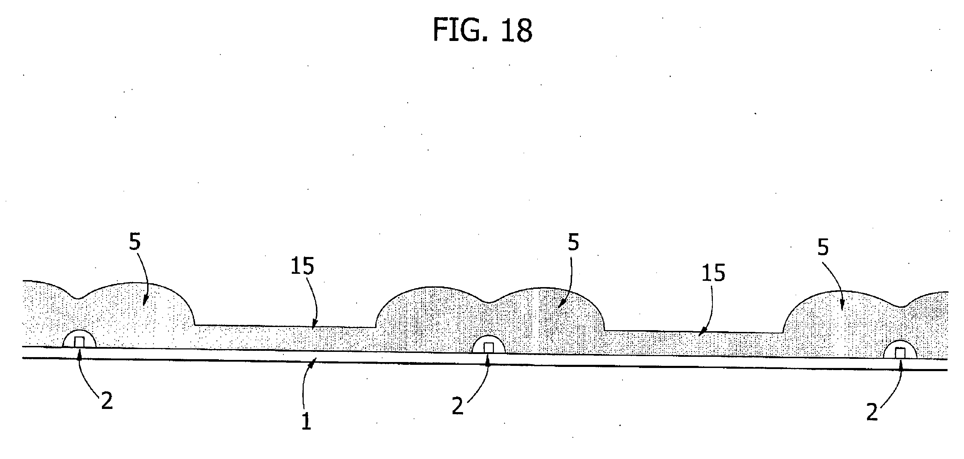

Figure 18 shows a further variant, which amounts, for example, to the configuration exemplified in Figure 8, where the multiplicity of caps 5 corresponding to the multiplicity of sources 2 is joined by a base-plate 15, the bottom surface of which is close to the substantially plane substrate 1 on which the multiplicity of sources 2 is deposited.

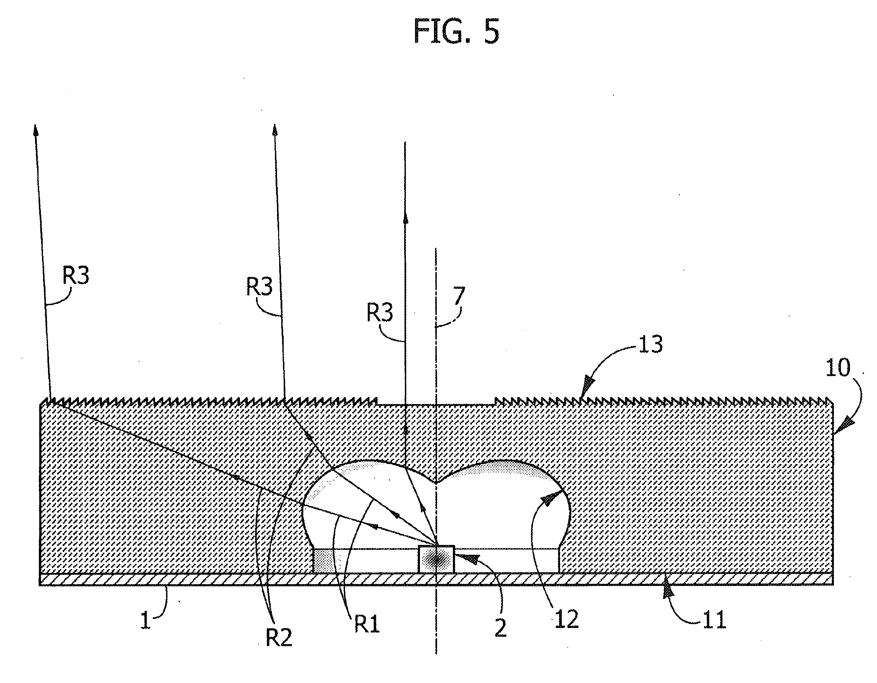

Figure 5 illustrates a further example, in which, set on top of the substantially plane substrate 1, housing one or more sources 2, is a plate made of transparent material 10 (for example, polycarbonate or polymethyl methacrylate), the face 11 of which facing the substrate 1 has one or more cavities 12 (just one of which is visible in Figure 5), each in an area corresponding to a respective source 2, shaped like a solid of rotation about the axis 7, the surface of which has a profile shaped in such a way that the rays R1 of light emitted by the source 2 are refracted in rays R2 that propagate through the plate 10 until they form a substantially uniform illuminance profile in the proximity of the plane P-P parallel to the substrate 1 and set at a distance therefrom by a predetermined distance D. As in the case of Figure 4, said distance is less than 20 mm. Said distance may, for example, be 15 mm. The top surface 13 of the plate 10 is substantially parallel and coplanar to the plane P-P and defines an optical surface 13 shaped in a such a way as to deflect the rays R2 in rays R3 exiting according to a predetermined illuminance profile. Said optical surface 13 can be obtained:
- by adopting a modular approach, i.e., by setting alongside one another a number of basic secondary optical systems corresponding to the number of sources 2 and of corresponding cavities 12, each of said basic secondary optical systems being optimized for the corresponding cavity 12, in order to obtain a predetermined illuminance profile at output from the plate 10;
- by adopting a unitary approach, i.e., by providing a secondary optical system 13 common to all the sources 2 and to the corresponding cavities 12.

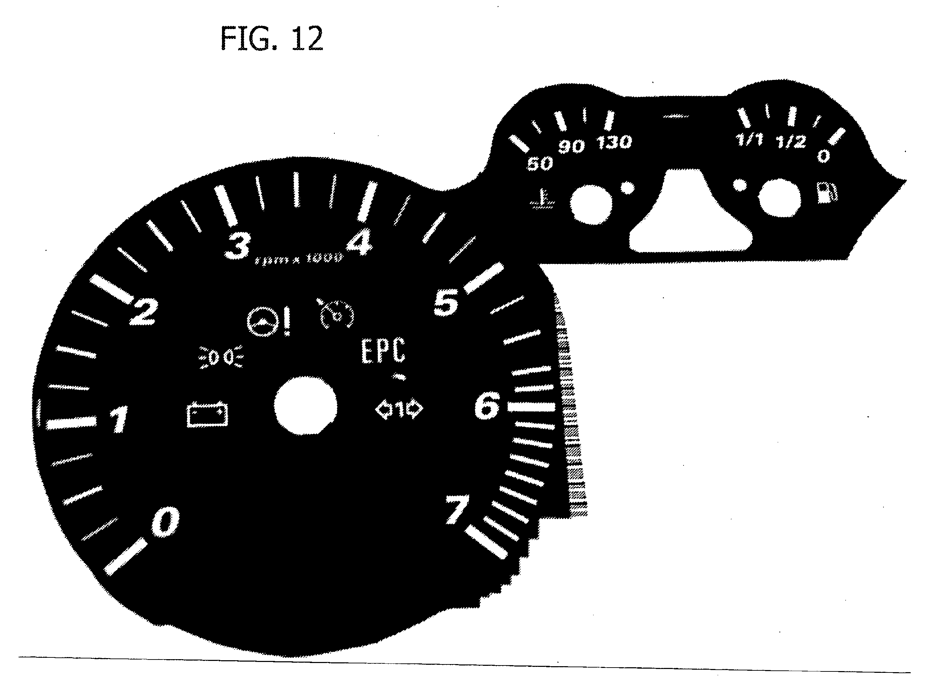

According to the invention, the optical system forming the subject of the present patent can be, for example, used as back-lighting system for dashboards. An example of mask for a dashboard is represented in Figure 12:
- the peripheral region, substantially a portion of annulus, is for example used for representing the graduated scale of the speedometer;
- the central region, substantially a circle, is used for housing the mobile pointer;
- the intermediate region is used for representing the icons.

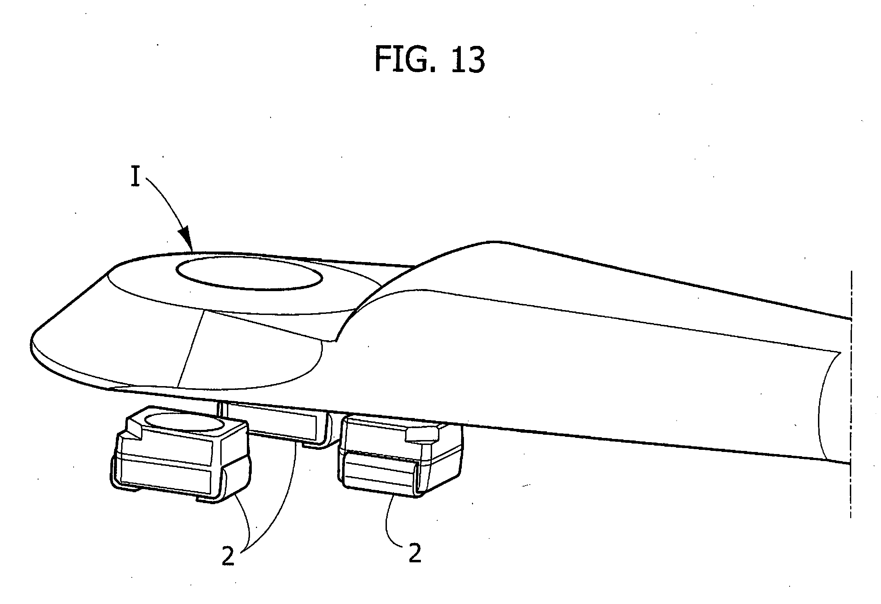

The central mobile pointer I is typically backlighted using a multiplicity of semiconductor sources 16, for example arranged as schematically represented in Figure 13. The arrangement in Figure 13 is used for minimizing the lack of uniformity of lighting of the pointer during its rotation.

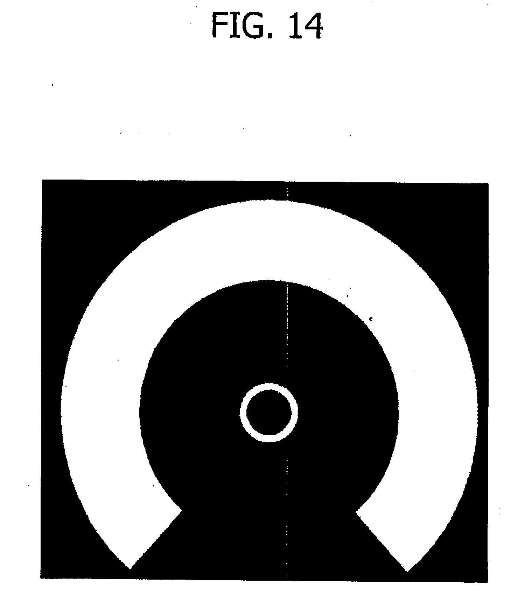

In the further embodiment of the present patent referred to previously, the primary optical system (5, 12) can be used for forming an illuminance profile of the type represented in Figure 14, constituted by:
- an outer region substantially shaped like a portion of annulus, designed for back-lighting the area occupied by the graduated scale; and
- an inner region substantially shaped like a portion of an annulus, substantially concentric to the previous one, designed to back-light the mobile pointer.

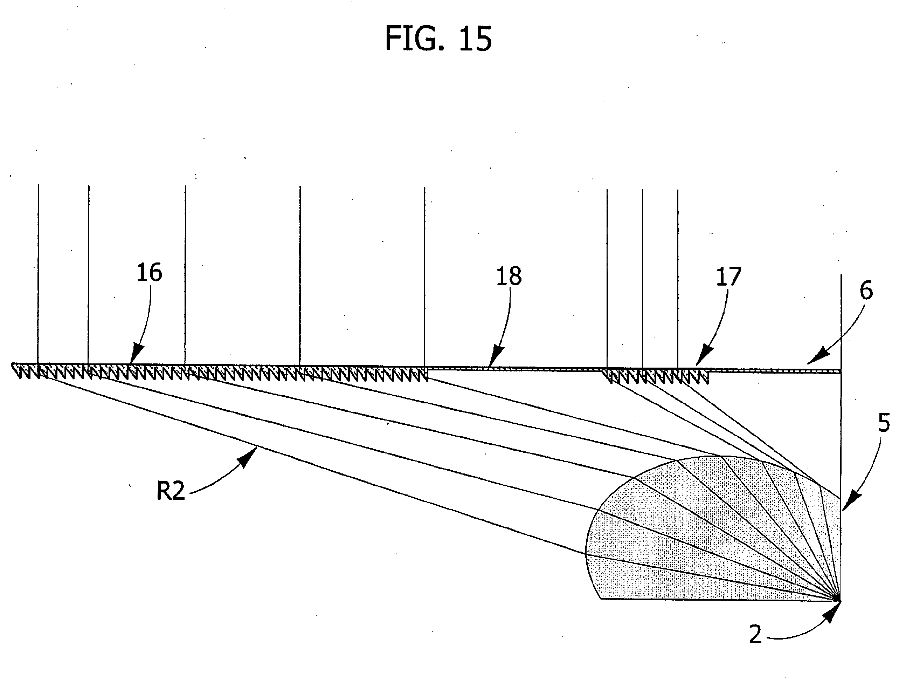

Said further embodiment of the present patent is schematically represented in Figure 15: the primary optical system 5 has a shape such that the rays emitted by a single source 2 are deviated in such a way as to illuminate two regions 16 and 17 of the secondary optical system 6 uniformly, leaving the intermediate region 18 substantially in darkness. In areas corresponding to said regions 16, 17 the secondary optical system has an appropriate optical profile, according to one of the embodiments described previously in the present patent, to form the desired illuminance profile. Said further embodiment of the present patent, described with reference to the optical scheme presented in Figure 4, can obviously be adapted to the optical scheme presented in Figure 5.

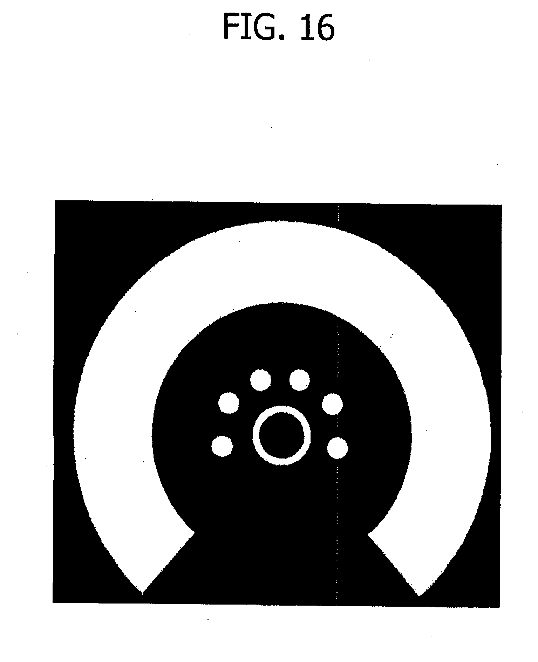

In a further embodiment of the present patent, the optical system can be used for providing an illuminance profile of the type represented in Figure 16, constituted by:
- an outer region substantially shaped like a portion of annulus, designed to back-light the area occupied by the graduated scale;
- an inner region substantially shaped like a portion of annulus, substantially concentric to the previous one, designed to back-light the mobile pointer; and
- a multiplicity of regions having a substantially circular shape, arranged in an intermediate position, designed to back-light the icons.

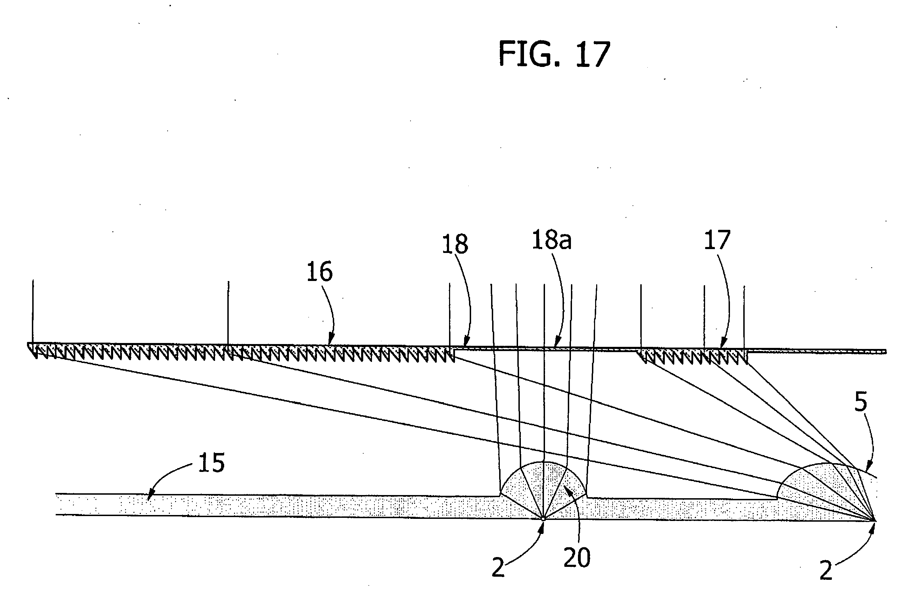

Said further embodiment of the present patent is schematically represented in Figure 17. The primary optical system 5 has a form such as to direct the rays emitted by a single source 2 in such a way as to illuminate two regions 16 and 17 of the secondary optical system 6 uniformly, leaving the intermediate region 18 substantially in darkness. In areas corresponding to said regions 16, 17 the secondary optical system has an appropriate optical profile, according to one of the embodiments described previously in the present patent, to form the desired illuminance profile. In areas corresponding to the region in darkness 18, a multiplicity of optical systems 15 are provided in the plate 14, each of which is designed to gather the light emitted by a corresponding source 2 and direct it into a portion 18a of said region in darkness 18, in order to back-light a corresponding icon. Said region 18a can present a secondary optical system, appropriately shaped, according to what is described in the present patent, to form a given illuminance profile.

Said further embodiment of the present patent, described with reference to the optical scheme presented in Figure 4, can obviously be adapted to the optical scheme presented in Figure 5.

As emerges clearly from the foregoing description, the lighting device according to the invention is based upon the idea of providing, for each source, a primary optical system and a secondary optical system in order to obtain a substantially uniform outgoing light beam having a predetermined illuminance profile, minimizing the thickness of the device.

Of course, without prejudice to the principle of the invention, the details of construction and the embodiments may vary widely with respect to what is described and illustrated herein purely by way of example, without thereby departing from the scope of the present invention as defined in the annexed claims.

## Claims

1. A lighting device used for back-lighting the dashboard of a motor vehicle, said device comprising:
- a substantially plane substrate (1);
- one or more semiconductor LED or chip-LED light sources (2) distributed over the substrate (1) and electrically connected to conductive supply paths;
- primary optical means (5; 12) associated to the semiconductor source or each semiconductor source, designed to refract the light emitted by said semiconductor source (2); and
- secondary optical means (6; 13), which control the divergence of the rays of light refracted by the primary optical means (5; 12),
said device being **characterized in that**:
- said primary optical means (5; 12) are prearranged with a surface shaped so that the light emitted by a single semiconductor source (2) is refracted in such a way as to produce a substantially uniform lighting in a plane (P-P) substantially parallel to said substrate (1) and set at a distance of less than 20 mm from said substrate (1), said substantially uniform lighting being produced for a surface extension that comprises areas corresponding to a minimum linear extension of about at least twice the distance between said plane (P-P) and said source (2); and **in that**:
- said secondary optical means (6;13) are prearranged in said plane (P-P) parallel to the substrate (1) and substantially in the areas illuminated by the primary optical means in order to refract the light rays coming from the primary optical means so that the divergence of the rays leaving said secondary optical means is contained within a given angle,
- said primary optical means (5, 12) are shaped in such a way that the light emitted by a single semiconductor source (2) is refracted in such a way as to produce on said plane (P-P) a discontinuous illuminated surface (16, 17) comprising a plurality of separate areas, each of the component areas being **characterized by** a predetermined illuminance profile,
- said separate illuminated areas comprise at least one first, outer, area shaped like an annulus, for lighting up the graduated scale of the dashboard, and a second, inner, area shaped like an annulus, for lighting up a pointer.

2. The lighting device according to Claim 1, **characterized in that** said primary optical means and said secondary optical means are defined by two elements (5, 6) separate from one another.

3. The lighting device according to Claim 1, **characterized in that** said primary optical means and said secondary optical means are defined by two surfaces (12, 13) of one and the same element (10).

4. The lighting device according to Claim 2, **characterized in that** the primary optical means comprise, for each source (2), a cap (5) made of material having a refractive index higher than 1, with an outer surface shaped so that the light emitted by the respective source (2) contained therein is refracted and forms, in the plane (P-P) substantially parallel to the substrate (1), a substantially uniform illuminance profile.

5. The lighting device according to Claim 4, **characterized in that** each cap (5) is directly injected around the respective source (2) in liquid or gel form, through the use of a mould, with subsequent thermal or UV treatment.

6. The lighting device according to Claim 4, **characterized in that** each cap (5) is preliminarily shaped and then set on the substrate (1) housing the sources (2), each cap (5) having on its bottom surface a cavity (14) that receives the respective source (2).

7. The lighting device according to Claim 6, **characterized in that** the cavity (14) made in the bottom surface of the cap has a substantially hemispherical shape and has the centre set on the axis passing through the centre of the emitting area of the source (2) and orthogonal to the substrate (1).

8. The lighting device according to Claim 6, **characterized in that** the space between the source (2) and the surface of the cavity (14) made in the bottom face of the cap (5) is filled with a material having a refractive index close to that of the cap.

9. The lighting device according to Claim 6, **characterized in that** the surface of the cavity (14) is appropriately shaped so that the position of the virtual source (2') of the rays (R1) traversing said cap (5) is predetermined.

10. The lighting device according to Claim 2, **characterized in that** the secondary optical means are constituted by a plate (6) made of material having a refractive index higher than 1 and having a first substantially plane face (6a) and a second face (6b) defining an optical surface designed to deflect the beam of incident rays according to a predetermined illuminance profile.

11. The lighting device according to Claim 10, **characterized in that** said optical surface (6b) defines a Fresnel profile shaped for determining a refraction of the incoming light ray within said profile, the light rays refracted by said Fresnel profile being subsequently subjected to a further refraction at output from said secondary optical means.

12. The lighting device according to Claim 10, **characterized in that** said optical surface (6b) defines a Fresnel profile shaped in such a way as to determine a refraction of the incident ray, and then a total internal reflection thereof, the light rays being subjected to a subsequent refraction at output from the optical system.

13. The lighting device according to Claim 10, **characterized in that** said Fresnel profile is shaped in such a way as to comprise areas designed to determine a refraction of the incident ray" and areas designed to determine a refraction of the incident ray and then a total internal reflection thereof, the light rays being subjected to a subsequent refraction at output from the optical system.

14. The lighting device according to Claim 10, **characterized in that** said optical surface (6b) corresponds to a theoretical Fresnel profile, except for optically inactive portions of said plate (6), in so far as it is not touched by the light rays emitted by the source and deviated by the primary optical means, where the thickness of the plate is increased with respect to said theoretical Fresnel profile in order to reduce the aspect ratio of the final profile of said plate.

15. The lighting device according to Claim 3, **characterized in that** the primary optical means and the secondary optical means are defined by the opposite surfaces (11, 13) of a plate made of transparent material (10) set on top of the substrate (1).

16. The lighting device according to Claim 15, **characterized in that** made on the face of said plate (10) facing said substrate (1) is a multiplicity of cavities (12), each cavity corresponding to a respective source (2) and being shaped like a solid of rotation about an axis (7) orthogonal to the substrate and passing through the centre of the source (2), the surface of said cavity (12) being shaped in such a way that the light emitted by the source is refracted by said surface to define a substantially uniform illuminance profile in the proximity of the second face (13) of said plate (10).

17. The lighting device according to Claim 16, **characterized in that** defined on the face of said plate (10) opposite to the one facing the sources (2) is an optical surface (13) designed to deflect the beam of outcoming rays according to a predetermined illuminance profile shaped according to a Fresnel profile with circular symmetry, with centre set on the axis orthogonal to the substrate (1) and passing through the centre of the area of emission of the respective source (2).

18. The lighting device according to Claim 4, **characterized in that** the primary optical means are constituted by a multiplicity of caps (5) connected to one another by a plate made of transparent material (19) resting on the substrate (1).

19. The device according to Claim 1, **characterized in that** said separate illuminated areas moreover comprise a plurality of third areas distributed circumferentially between said first area and said second area, for lighting up a plurality of icons on the dashboard.

20. The device according to Claim 19, **characterized in that** said primary optical means comprise a plurality of auxiliary LED sources (16) for lighting up said third areas.

21. The device according to Claim 1, **characterized in that** the divergence of the rays leaving said secondary optical means (5; 12) is not greater than 20°.

## Patentansprüche

1. Beleuchtungsvorrichtung, die für die Hintergrundbeleuchtung des Armaturenbrettes eines Kraftfahrzeugs verwendet wird, wobei die Vorrichtung enthält:
- ein im wesentlichen ebenes Substrat (1);
- wenigstens eine Halbleiter-LED- oder Chip-LED-Lichtquelle (2), die über das Substrat (1) verteilt ist und mit leitfähigen Versorgungswegen elektrisch verbunden ist;
- primäre optische Einrichtungen (5; 12), die der Halbleiterquelle oder jeder Halbleiterquelle zugeordnet und dazu bestimmt sind, das Licht zu brechen, das von der Halbleiterquelle (2) emittiert wird; und
- sekundäre optische Einrichtungen (6; 13), die die Divergenz der Lichtstrahlen steuern, die von den primären optischen Einrichtungen (5; 12) gebrochen werden,
wobei die Vorrichtung **dadurch gekennzeichnet ist, dass**:
- die primären optischen Einrichtungen (5; 12) mit einer Oberfläche ausgestattet sind, die derart geformt ist, dass das Licht, das von einer einzelnen Halbleiterquelle (2) emittiert wird, derart gebrochen wird, dass eine im wesentlichen einheitliche Beleuchtung in einer Ebene (P-P) im wesentlichen parallel zu dem Substrat (1) und in einem Abstand erzeugt wird, der weniger als 20 mm von dem Substrat (1) entfernt ist, wobei die im wesentlichen einheitliche Beleuchtung für eine Oberflächenausdehnung erzeugt wird, die Bereiche enthält, die einer minimalen linearen Ausdehnung von etwa wenigstens dem Doppelten des Abstandes zwischen der Ebene (P-P) und der Quelle (2) entsprechen; und dadurch, dass:
die sekundären optischen Einrichtungen (6; 13) in der Ebene (P-P) parallel zu dem Substrat (1) und im wesentlichen in den Bereichen angeordnet sind, die von den primären optischen Einrichtungen beleuchtet werden, um die Lichtstrahlen, die von den primären optischen Einrichtungen eintreffen, derart zu brechen, dass die Divergenz der Strahlen, die die sekundären optischen Einrichtungen verlassen, in einem gegebenen Winkel enthalten ist,
- wobei die primären optischen Einrichtungen (5, 12) derart geformt sind, dass das Licht, das von einer einzigen Halbleiterquelle (2) emittiert wird, derart gebrochen wird, dass auf der Ebene (P-P) eine nicht kontinuierlich beleuchtete Oberfläche (16, 17) erzeugt wird, die eine Vielzahl separater Bereiche enthält, wobei jeder der Komponentenbereiche durch ein vorbestimmtes Beleuchtungsprofil **gekennzeichnet** ist,
- wobei die separaten beleuchteten Bereiche wenigstens einen ersten, äußeren Bereich, der wie ein Ring geformt ist, um die Ziffernskala des Armaturenbrettes zu beleuchten, und einen zweiten, inneren Bereich enthalten, der wie ein Ring geformt ist, um einen Zeiger zu beleuchten.

2. Beleuchtungsvorrichtung nach Anspruch 1, **dadurch gekennzeichnet, dass** die primären optischen Einrichtungen und die sekundären optischen Einrichtungen durch zwei Elemente (5, 6) definiert sind, die voneinander getrennt sind.

3. Beleuchtungsvorrichtung nach Anspruch 1, **dadurch gekennzeichnet, dass** die primären optischen Einrichtungen und die sekundären optischen Einrichtungen durch zwei Oberflächen (12, 13) ein und desselben Elementes (10) definiert sind.

4. Beleuchtungsvorrichtung nach Anspruch 2, **dadurch gekennzeichnet, dass** die primären optischen Einrichtungen für jede Quelle (2) eine Kappe (5) enthalten, die aus einem Material besteht, das einen Brechungsindex von mehr als 1 hat, mit einer Außenoberfläche, die derart geformt ist, dass das Licht, das von der entsprechenden Quelle (2) emittiert wird, die darin enthalten ist, gebrochen wird und in der Ebene (P-P), die im wesentlichen parallel zum Substrat (1) ist, ein im wesentlichen einheitliches Beleuchtungsprofil ausbildet.

5. Beleuchtungsvorrichtung nach Anspruch 4, **dadurch gekennzeichnet, dass** jede Kappe (5) direkt um die entsprechende Quelle (2) flüssig oder in Gelform mit Hilfe einer Form und anschließender thermischer Behandlung oder UV-Behandlung eingespritzt ist.

6. Beleuchtungsvorrichtung nach Anspruch 4, **dadurch gekennzeichnet, dass** jede Kappe (5) vorab geformt und anschließend auf das Substrat (1) gesetzt wird, das die Quellen (2) aufnimmt, wobei jede Kappe (5) ihren eigenen Bodenflächenhohlraum (14) hat, der die entsprechende Quelle (2) aufnimmt.

7. Beleuchtungsvorrichtung nach Anspruch 6, **dadurch gekennzeichnet, dass** der Hohlraum (14), der in der Bodenfläche der Kappe ausgebildet ist, eine im wesentlichen halbkugelförmige Form hat und sich sein Zentrum auf der Achse befindet, die durch das Zentrum des Emittierbereiches der Quelle (2) und orthogonal zu dem Substrat (1) verläuft.

8. Beleuchtungsvorrichtung nach Anspruch 6, **dadurch gekennzeichnet, dass** der Abstand zwischen der Quelle (2) und der Oberfläche des Hohlraumes (14), der in der Bodenfläche der Kappe (5) ausgebildet ist, mit einem Material gefüllt ist, das einen Brechungsindex hat, der dem der Kappe gleichkommt.

9. Beleuchtungsvorrichtung nach Anspruch 6, **dadurch gekennzeichnet, dass** die Oberfläche des Hohlraums (14) etwa so geformt ist, dass die Position der virtuellen Quelle (2') der Strahlen (R1), die die Kappe (5) durchlaufen, vorbestimmt ist.

10. Beleuchtungsvorrichtung nach Anspruch 2, **dadurch gekennzeichnet, dass** die sekundären optischen Einrichtungen aus einer Platte (6) bestehen, die aus einem Material gefertigt ist, das einen Brechungsindex größer 1 hat, und eine erste im wesentlichen plane Fläche (6a) sowie eine zweite Fläche (6b) aufweist, die eine optische Oberfläche bildet, die dazu bestimmt ist, den Strahl einfallender Strahlen gemäß einem vorbestimmten Beleuchtungsprofil abzulenken.

11. Beleuchtungsvorrichtung nach Anspruch 10, **dadurch gekennzeichnet, dass** die optische Oberfläche (6b) ein Fresnel-Profil definiert, das derart geformt ist, dass es eine Brechung des einfallenden Lichtes innerhalb des Profils bestimmt, wobei die Lichtstrahlen, die von dem Fresnel-Profil gebrochen werden, anschließend einer weiteren Brechung an dem Ausgang aus den sekundären optischen Einrichtungen unterzogen werden.

12. Beleuchtungsvorrichtung nach Anspruch 10, **dadurch gekennzeichnet, dass** die optische Oberfläche (6b) ein Fresnel-Profil definiert, das so geformt ist, dass eine Brechung des einfallenden Strahls und anschließend eine innere Totalreflexion desselben bestimmt wird, wobei die Lichtstrahlen einer anschließenden Brechung an dem Ausgang aus dem optischen System unterzogen werden.

13. Beleuchtungsvorrichtung nach Anspruch 10, **dadurch gekennzeichnet, dass** das Fresnel-Profil derart geformt ist, dass es Bereiche enthält, die dazu bestimmt sind, eine Brechung des einfallenden Strahls zu bestimmen, und Bereiche, die dazu bestimmt sind, eine Brechung des einfallenden Strahls und anschließend eine innere Totalreflexion desselben zu bestimmen, wobei die Lichtstrahlen einer anschließenden Brechung an dem Ausgang aus dem optischen System unterzogen werden.

14. Beleuchtungsvorrichtung nach Anspruch 10, **dadurch gekennzeichnet, dass** die optische Oberfläche (6b) einem theoretischen Fresnel-Profil mit Ausnahme optisch inaktiver Abschnitte der Platte (6) insoweit entspricht, als sie nicht von den Lichtstrahlen berührt wird, die von der Quelle emittiert und von den primären optischen Einrichtungen abgelenkt werden, wobei die Dicke der Platte im Bezug auf das theoretische Fresnel-Profil erhöht ist, um das Bildseitenverhältnis des finalen Profils der Platte zu verringern.

15. Beleuchtungsvorrichtung nach Anspruch 3, **dadurch gekennzeichnet, dass** die primären optischen Einrichtungen und die sekundären optischen Einrichtungen durch die gegenüberliegenden Oberflächen (11, 13) einer Platte definiert sind, die aus einem transparenten Material (10) besteht, das auf der Oberseite des Substrates (1) angeordnet ist.

16. Beleuchtungsvorrichtung nach Anspruch 15, **dadurch gekennzeichnet, dass** auf der Fläche der Platte (10), die dem Substrat (1) zugewandt ist, eine Vielzahl von Hohlräumen (12) ausgebildet ist, wobei jeder Hohlraum einer jeweiligen Quelle (2) entspricht und wie ein Rotationskörper um eine Achse (7) geformt ist, die orthogonal zu dem Substrat und durch das Zentrum (2) der Quelle verläuft, wobei die Oberfläche des Hohlraums (12) derart geformt ist, dass das Licht, das von der Quelle emittiert wird, von der Oberfläche gebrochen wird, um ein im wesentlichen einheitliches Beleuchtungsprofil in der Nähe der zweiten Fläche (13) der Platte (10) zu definieren.

17. Beleuchtungsvorrichtung nach Anspruch 16, **dadurch gekennzeichnet, dass** auf der Fläche der Platte (10), die jener gegenüberliegt, die den Quellen (2) zugewandt ist, eine optische Oberfläche (13) definiert ist, die dazu bestimmt ist, den Strahl ausgehender Strahlen gemäß einem vorbestimmten Beleuchtungsprofil abzulenken, das gemäß einem Fresnel-Profil mit Kreissymmetrie geformt ist, wobei das Zentrum auf der Achse liegt, die orthogonal zu dem Substrat (1) und durch das Zentrum des Emissionsbereiches der entsprechenden Quelle (2) verläuft.

18. Beleuchtungsvorrichtung nach Anspruch 4, **dadurch gekennzeichnet, dass** die primären optischen Einrichtungen aus einer Vielzahl von Kappen (5) bestehen, die miteinander durch eine Platte verbunden sind, die aus einem transparenten Material (19) besteht, das auf dem Substrat (1) ruht.

19. Vorrichtung nach Anspruch 1, **dadurch gekennzeichnet, dass** die separaten beleuchteten Bereiche darüber hinaus eine Vielzahl dritter Bereiche enthalten, die in Umfangsrichtung zwischen dem ersten Bereich und dem zweiten Bereich verteilt sind, um eine Vielzahl von Symbolen auf dem Armaturenbrett zu beleuchten.

20. Vorrichtung nach Anspruch 19, **dadurch gekennzeichnet, dass** die primären optischen Einrichtungen eine Vielzahl von Zusatz-LED-Quellen (16) zum Beleuchten der dritten Bereiche enthalten.

21. Vorrichtung nach Anspruch 1, **dadurch gekennzeichnet, dass** die Divergenz der Strahlen, die die sekundären optischen Einrichtungen (5; 12) verlassen, nicht größer als 20° ist.

## Revendications

1. Dispositif d'éclairage utilisé pour le rétroéclairage de la planche de bord d'un véhicule à moteur, ledit dispositif comprenant :
un substrat sensiblement plan (1) ;
une ou plusieurs sources de lumière à semi-conducteur de type DEL ou puce DEL (2) distribuées sur le substrat (1) et électriquement connectées à des chemins d'alimentation conducteurs ;
des moyens optiques principaux (5 ; 12) associés à la source à semi-conducteur ou à chaque source à semi-conducteur conçus pour réfracter la lumière émise par ladite source à semi-conducteur (2) ; et
des moyens optiques secondaires (6 ; 13) qui contrôlent la divergence des rayons de lumière réfractés par les moyens optiques principaux (5 ; 12),
ledit dispositif étant **caractérisé en ce que** :
lesdits moyens optiques principaux (5 ; 12) sont préarrangés avec une surface ayant une forme telle que la lumière émise par une source à semi-conducteur unique (2) soit réfractée de telle façon qu'elle produise un éclairage sensiblement uniforme dans un plan (P-P) sensiblement parallèle audit substrat (1) et sont situés à une distance de moins de 20 mm dudit substrat (1), ledit éclairage sensiblement uniforme étant produit pour une extension de surface qui comprend des zones correspondant à une extension linéaire minimum d'environ au moins deux fois la distance entre ledit plan (P-P) et ladite source (2) ; et **en ce que** :
lesdits moyens optiques secondaires (6 ; 13) sont préarrangés dans ledit plan (P-P) parallèle au substrat (1) et sensiblement dans les zones illuminées par les moyens optiques principaux de manière à réfracter les rayons de lumière provenant des moyens optiques principaux de manière à ce que la divergence des rayons quittant lesdits moyens optiques secondaires soit contenue dans un angle donné,
lesdits moyens optiques principaux (5 ; 12) ont une forme telle que la lumière émise par une source à semi-conducteur unique (2) soit réfractée de telle façon qu'elle produise sur ledit plan (P-P) une surface éclairée discontinue (16, 17) comprenant une pluralité de zones séparées, chacune des zones constituantes étant **caractérisée par** un profil d'éclairement prédéterminé,
lesdites zones éclairées séparées comprennent au moins une première zone externe de forme annulaire pour éclairer l'échelle graduée de la planche de bord, et une seconde zone interne de forme annulaire pour éclairer un indicateur.

2. Dispositif d'éclairage selon la revendication 1, **caractérisé en ce que** lesdits moyens optiques principaux et lesdits moyens optiques secondaires sont définis par deux éléments (5, 6) séparés l'un de l'autre.

3. Dispositif d'éclairage selon la revendication 1, **caractérisé en ce que** lesdits moyens optiques principaux et lesdits moyens optiques secondaires sont définis par deux surfaces (12, 13) d'un seul et unique élément (10).

4. Dispositif d'éclairage selon la revendication 2, **caractérisé en ce que** lesdits moyens optiques principaux comprennent, pour chaque source (2), une coiffe (5) constituée d'un matériau ayant un indice de réfraction supérieur à 1, avec une surface externe ayant une forme telle que la lumière émise par la source respective (2) y étant contenue est réfractée et forme, dans le plan (P-P) sensiblement parallèle au substrat (1), un profil d'éclairage sensiblement uniforme.

5. Dispositif d'éclairage selon la revendication 4, **caractérisé en ce que** chaque coiffe (5) est directement injectée autour de la source respective (2) sous la forme d'un liquide ou d'un gel, via l'utilisation d'un moule et d'un traitement subséquent thermique ou par rayonnement UV.

6. Dispositif d'éclairage selon la revendication 4, **caractérisé en ce que** chaque coiffe (5) est préalablement mise en forme puis disposée sur le substrat (1) accueillant les sources (2), chaque coiffe (5) présentant au niveau de sa surface inférieure une cavité (14) qui reçoit la source respective (2).

7. Dispositif d'éclairage selon la revendication 6, **caractérisé en ce que** la cavité (14) pratiquée au niveau de la surface inférieure de la coiffe a une forme sensiblement hémisphérique et a son centre disposé sur l'axe traversant le centre de la zone d'émission de la source (2) et perpendiculaire au substrat (1).

8. Dispositif d'éclairage selon la revendication 6, **caractérisé en ce que** l'espace entre la source (2) et la surface de la cavité (14) pratiqué au niveau de la surface inférieure de la coiffe (5) est rempli d'un matériau ayant un indice de réfraction proche de celui de la coiffe.

9. Dispositif d'éclairage selon la revendication 6, **caractérisé en ce que** la surface de la cavité (14) est mise en forme de manière appropriée de manière à ce que la position de la source virtuelle (2') des rayons (R1) traversant ladite coiffe (5) est prédéterminée.

10. Dispositif d'éclairage selon la revendication 2, **caractérisé en ce que** les moyens optiques secondaires sont constitués d'une plaque (6) faite d'un matériau ayant un indice de réfraction supérieur à 1 et ayant une première face sensiblement plane (6a) et une seconde face (6b) définissant une surface optique conçue pour dévier le faisceau de rayons incidents conformément à un profil d'éclairage prédéterminé.

11. Dispositif d'éclairage selon la revendication 10, **caractérisé en ce que** ladite surface optique (6b) définit un profil de Fresnel ayant une forme pour déterminer une réfraction du rayon de lumière entrant dans ledit profil, les rayons de lumière réfractés par ledit profil de Fresnel étant ensuite soumis à une autre réfraction à la sortie desdits moyens optiques secondaires.

12. Dispositif d'éclairage selon la revendication 10, **caractérisé en ce que** ladite surface optique (6b) définit un profil de Fresnel ayant une forme telle qu'elle détermine une réfraction du rayon incident, puis une réflexion interne totale de celui-ci, les rayons de lumière étant ensuite soumis à une autre réfraction à la sortie du système optique.

13. Dispositif d'éclairage selon la revendication 10, **caractérisé en ce que** ledit profil de Fresnel a une forme telle qu'il comprend des zones conçues pour déterminer une réfraction du rayon incident et des zones conçues pour déterminer une réfraction du rayon incident, puis une réflexion interne totale de celui-ci, les rayons de lumière étant ensuite soumis à une autre réfraction à la sortie du système optique.

14. Dispositif d'éclairage selon la revendication 10, **caractérisé en ce que** ladite surface optique (6b) correspond à un profil de Fresnel, sauf pour les parties optiquement inactives de ladite plaque (6), tant qu'elle n'est pas touchée par les rayons de lumière émis par la source et déviés par les moyens optiques principaux, où l'épaisseur de la plaque est accrue par rapport audit profil de Fresnel théorique de manière à réduire le rapport largeur/longueur du profil final de ladite plaque.

15. Dispositif d'éclairage selon la revendication 3, **caractérisé en ce que** lesdits moyens optiques principaux et lesdits moyens optiques secondaires sont définis par les surfaces opposées (11, 13) d'une plaque constituée d'un matériau transparent (10) disposée sur la surface supérieure du substrat (1).

16. Dispositif d'éclairage selon la revendication 15, **caractérisé en ce qu'**une pluralité de cavités (12) sont pratiquées sur la face de ladite plaque (10) faisant face au substrat (1), chaque cavité correspondant à une source respective (2) et ayant la forme d'un solide en rotation autour d'un axe (7) perpendiculaire au substrat et traversant le centre de la source (2), la surface de ladite cavité (12) ayant une forme telle que la lumière émise par la source est réfractée par ladite surface pour définir un profil d'éclairage sensiblement uniforme à proximité de la seconde face (13) de ladite plaque (10).

17. Dispositif d'éclairage selon la revendication 16, **caractérisé en ce que**, sur la face de ladite plaque (10) opposée à celle faisant face aux sources (2), est définie une surface optique (13) conçue pour dévier le faisceau de rayons sortants suivant un profil d'éclairage prédéterminé ayant une forme selon un profil de Fresnel à symétrie circulaire, avec le centre placé sur l'axe perpendiculaire au substrat (1) et traversant le centre de la zone d'émission de la source respective (2).

18. Dispositif d'éclairage selon la revendication 4, **caractérisé en ce que** les moyens optiques principaux sont constitués d'une pluralité de coiffes (5) raccordées les unes aux autres par une plaque constituée d'un matériau transparent (19) placé sur le substrat (1).

19. Dispositif selon la revendication 1, **caractérisé en ce que** lesdites zones éclairées séparées comprennent en outre une pluralité de troisièmes zones distribuées de manière circulaire entre ladite première zone et ladite deuxième zone, pour éclairer une pluralité d'icônes situées sur la planche de bord.

20. Dispositif selon la revendication 19, **caractérisé en ce que** lesdits moyens optiques principaux comprennent une pluralité de sources DEL auxiliaires (16) pour éclairer lesdites troisièmes zones.

21. Dispositif selon la revendication 1, **caractérisé en ce que** la divergence des rayons quittant lesdits moyens optiques secondaires (5 ; 12) n'excède pas 20°.
